# EUROPEAN PATENT APPLICATION

(11) **EP 2 599 660 A1**
(43) Date of publication of application: **05.06.2013**
(21) Application number: 10855245.6
(22) Date of filing: 23.12.2010
(51) Int. Cl.: B60N 2/30

(54) **VEHICLE SEAT THAT CAN BE CONVERTED INTO A CHILD SEAT**

(30) Priority: 26.07.2010 ES 201030783 U
(71) Applicant: Rodrigo Pereña, Juan Manuel, 47320 Tudela De Duero (ES)
(72) Inventor: Rodrigo Pereña, Juan Manuel, 47320 Tudela De Duero (ES)
(74) Representative: Urizar Anasagasti, Jesus Maria
(86) International application number: PCT/ES2010/070868
(87) International publication number: WO 2012/013837

(57) **Abstract**

Convertible vehicle seat into a seat for children, incorporated in the backrest (1) in the lower area of the padded structure (3) which is joined at the lower part that folds down onto the seat of the vehicle (2) until it is horizontal, and in the upper area, above the latter, are two removable cushions (4), forming the assembly of the smaller seat that is located above the usual seat (2) of the vehicle and with a slightly recessed backrest (1); and in the seat (2), in the intermediate and front area there is a joined padded structure (7), which folds forwards, positioned as an extension of the actual seat (2) of the vehicle, forming a lounger for the baby.

## Description

### Object of the invention

The present invention relates to a seat for a vehicle which, as the heading itself indicates, can be converted or adapted into a seat for children, adjustable in height and thus adaptable to the age of the user, of the type that are placed in the back seats of the vehicle, in which the child travels facing forward, in the same position as the other occupants of the vehicle. This seat can also be converted into cot or baby lounger, of the type that is usually placed in the front seat, in which the child faces backwards with the head towards the forward position of the vehicle.

### Background of the invention

There are multiple seat and cot solutions for children, with the ability to adapt to any of the seats of a conventional vehicle. There are superimposed elements that, when are fixed to a vehicle seat, an adult person cannot use the seat, therefore there is less useful space, unless this element is disassembled and removed from the interior of the car.

There are also known solutions that allow for adapting an adult seat to a child seat, by moving the padded structure or assembly of cushions from their position in the seat. This type of solutions is designed exclusively for children of a certain age with the objective of sitting the child in the seat of the vehicle with a number of additional cushions, elevating the child above the conventional seat, preventing sideways movement, and forming an additional headrest at a height lower than the usual headrest of the vehicle seat itself.

### Description of the invention

The convertible vehicle seat into a seat for children, object of the present invention, comprises in one single assembly, two types of adaptations; namely:
a) A seat for children of a certain age, who travel already sitting in a seat according to their size, which is provided with seatbelts and other safety measures typical of this type of seats. This seat is located in the backrest of the vehicle seat and comprises a padded structure on both sides that functions as both a backrest for an adult and a seat for a child, with the necessary comfort, connected at the base in such a way that it folds down to a horizontal position on the car seat. Above this are two cushions or removable padded structures, which upon removal from the backrest allow the formation of a small sized seat space located above the usual seat of the vehicle and a slight recess in the backrest.
b) A lounger for a baby, in which the baby travels in a backwards position, with the head facing frontwards. For this purpose, in the intermediate or front area of the vehicle seat, is a structure suitably padded on both sides so that it functions as both a seat for an adult and comfortable backrest of the lounger connected, which folds down towards the front, positioning itself as an extension of the vehicle seat itself forming, in conjunction with the latter, the said lounger.

The removable cushions located in the upper area of the backrest of the vehicle seat, have connection elements or other means of connection to the sides of the seat, when configured as the seat previously described in point 1 or to the sides of the lounger when the seat is configured as such; constituting in both cases, side rest means for the child, at the level of the childs waist or head.

Likewise, the seat or booster seat that forms the base of the backrest of the vehicle seat is intended to have guides on both sides through which it can be moved manually along the backrest or with a mechanism allowing to elevate it or lower it, with the purpose of varying the height thereof in order to adapt it to children of any age.

It has also been intended that the backrest in the area hidden by the foldable or removable cushions, as well as the vehicle seat in the area hidden by the padded foldable structure in the same to form the lounger, are supplied with seat belts. In the area of the lounger, said seatbelts are adaptable in various positions according to the height of the child; and the seatbelts located in the child seat, located in the backrest of the vehicle seat are fixed, since the seat moves upwards and downwards adapting it to the height of the child.

There are several advantages of this convertible seat: on the one hand, it is not necessary to have the typical booster seat and/or lounger for vehicles, that are attached to one of the seats by less convenient means that motivate the frequent fact that, once installed, they remain in the vehicle until the child is old enough to stop using it. The lack of extra equipment inside the car allows for the complete availability of the seats by adults or by children, with no more than carrying out the adaptation; this particularly affects public transport, whereby the seat is available for use only when a child who needs to use it is travelling. The adaptation is carried out with no more than pulling the backrest, or the convertible seat, and adjusting it to the position suitable for the child, or folding the foldable part back to leave it as a conventional seat.

Another additional advantage is the security that this adaptation provides, since it forms part of the actual structure of the vehicle, it avoids that the attachments and fixtures of the child seats for vehicles are badly made and cause an accident. In a lot of research carried out, it has been found that there is a certain high percentage of safety loss due to this reason in the conventional booster seats and cots.

The adapted seat can be any of the back seats of the vehicle, or the front passenger seat, particularly for the cases wherein the seat will be used as a lounger.

The cost of manufacturing the conventional seat and a convertible one made according to the invention is practically the same.

### Description of the figures

To supplement the description that is being carried out and with the object of facilitating a better understanding of the characteristics of the invention, attached to the present specification are a set of drawings wherein by way of non-limitative example, the following has been represented:
Figure 1 shows an elevated front view of the seat according to the invention.
Figure 2 shows a side view of said seat in a position in which the seat (3) in the backrest is beginning to unfold.
Figures 3 and 4 both correspond with elevated views of the previous seat, wherein the height is being adjusted and wherein the side cushions (4) are finally placed.
Figure 5 shows a side view of this seat wherein the lounger (7) in the seat (2) is beginning to unfold.
Figure 6 corresponds with an elevated view of the previous seat, wherein the side cushions have been placed in their final position.

### Preferred embodiment of the invention

As shown in the referenced figures, this seat can form either a booster seat installed into the backrest, or a lounger included in the seat. For this purpose, the seat of the invention comprises a backrest (1) that includes in its interior: a foldable padded structure (3) that occupies the lower area and two removable cushions (4) located above the latter. The foldable structure (3) is joined to the lower area and thus folds down to a horizontal position, above and parallel to the vehicle seat (2). Said seat (2) in turn, includes in its interior a foldable padded structure (7), joined to the front area and which upon unfolding, remains in a position extending the base of the seat (2), with the possibility of adopting different angles of inclination according to the requirements of each case.

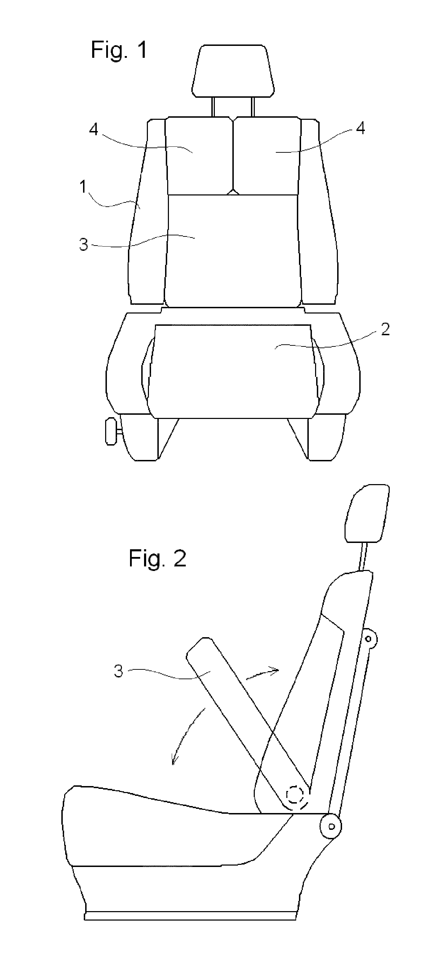

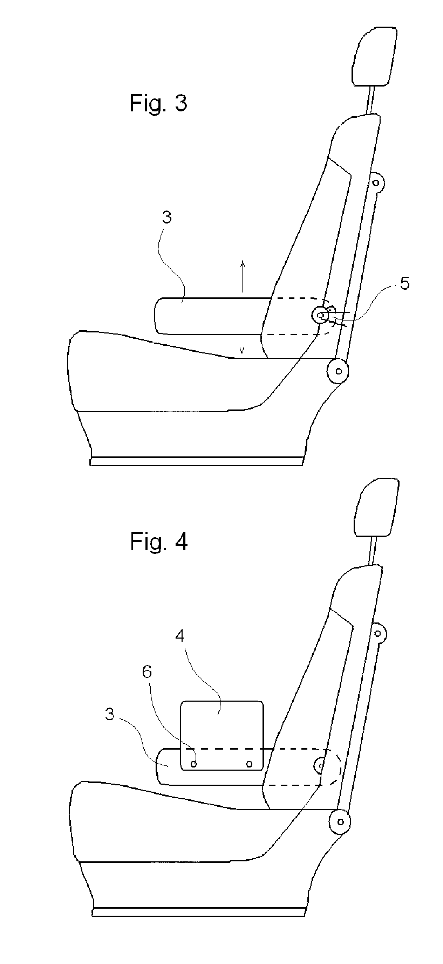

As shown in figure 2, the foldable padding (3) is embedded in the backrest (1) of the seat and joins with the lower area, in front of the conventional joining of the backrest (1) with respect to the seat (2). In the position shown in figure 3, the structure (3) is positioned horizontally and, once in this position, it can be displaced vertically by means of the side guide (5); this movement can be carried out manually or by means of any mechanism with mechanical, electrical, or any other operation. Once the position according to the child has been defined, the additional cushions (4) are placed on both sides of the supplementary seat (3), by means of connection elements (6), which may be built-in or of any other conventional type allowing an easy attachment and removal, to return it back to the original position shown in figure 1, whereby the seat is used for adults. This seat can also be reclined, using the joining system itself of the backrest (1) of the vehicle seat in which this system is installed.

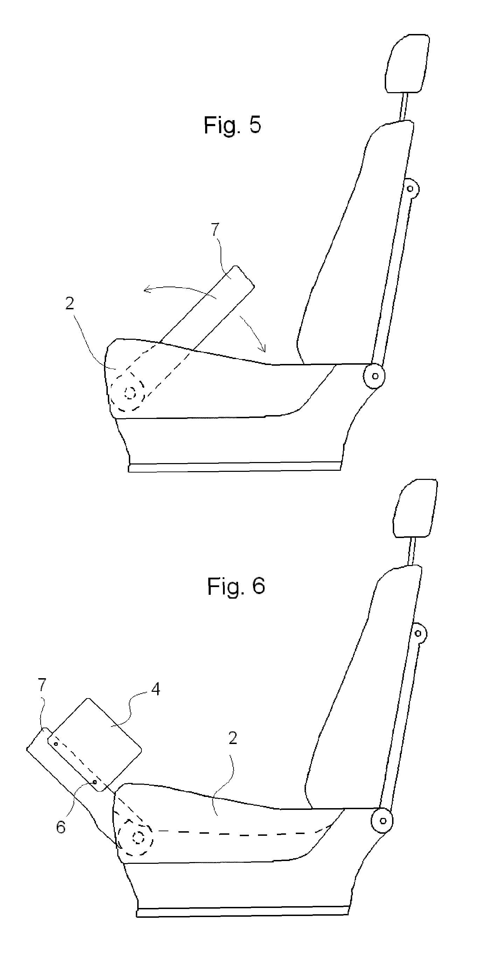

Figure 5 shows the folding of the foldable padded structure (7), for forming a lounger in the part of the said vehicle seat (2). This padded structure (7) is joined frontwards and in the completely unfolded position it is arranged as an extension of said seat, forming a cot sufficiently sized to hold a child in a reclined position, with the head positioned towards the front part of the vehicle. The additional cushions (4) are placed on the sides of the structure (7), on the sides of the head or of the body of the child to prevent sideways movement.

Once the nature of the invention, as well as the preferred embodiment have been sufficiently described, it is stated for relevant purposes that the materials, shape, size and arrangement of the elements described may be modified, provided that they to not alter the essential characteristics of the invention that is claimed below:

## Claims

1. Convertible vehicle seat into a seat for children, **characterized in that** it comprises:
a) in the backrest (1), in the lower area of the padded structure (3), which is joined at the lower area which folds down onto the seat of the vehicle (2) until it is horizontal, and in the upper area, above the latter, are two removable cushions (4), forming the assembly of the smaller seat that is located above the usual seat (2) of the vehicle and with a slightly recessed backrest (1);
b) in the seat (2), in the intermediate and front area there is a joined padded structure (7), which folds forwards, positioned as an extension of the actual seat (2) of the vehicle, forming a lounger for the baby.

2. Seat, according to claim 1, **characterized in that** the cushions (4) positioned in the upper area of the backrest (1) of the seat of the vehicle, are provided with connection elements (6) or other means of connection to the sides of the seat (3) or to the sides of the lounger (7), establishing support means for the child.

3. Seat, according to the previous claims, **characterized in that** the seat (3) located in the base of the backrest (1), is provided with guides (5) on respective sides through which it can be moved manually along the backrest or with a mechanism allowing to elevate it or lower it, with the purpose of varying the height thereof in order to adapt it to the height of the child.

4. Seat, according to the previous claims, **characterized in that** the backrest (1) of the area hidden by foldable or removable cushions is provided with its own seat belts, guaranteeing to secure the child correctly, with five points of attachment to the seat structure.

5. Seat, according to the previous claims, **characterized in that** the seat (2) of the vehicle, in the area hidden by the foldable padded structure (7) in the seat, has seat belts are provided, adaptable in various positions according to the height of the baby.

6. Seat, according to the previous claims, **characterized in that** both the backrest of the lounger or cot (7), as well as the seat (3) for an older child, can recline, with an adjustable reclining angle adopted for each case.
